(19) Europäisches Patentamt
European Patent Office
Office européen des brevets

(11) Publication number: **0 023 062**
**A1**

# (12) EUROPEAN PATENT APPLICATION

(21) Application number: 80200668.4

(22) Date of filing: 09.07.80

(51) Int. Cl.³: A 23 D 5/00
A 23 G 1/00

(30) Priority: 18.07.79 US 58713

(43) Date of publication of application: 28.01.81 Bulletin 81/4

(84) Designated Contracting States: AT BE CH DE FR GB IT LI LU NL SE

(71) Applicant: THE PROCTER & GAMBLE COMPANY
301 East Sixth Street
Cincinnati Ohio 45202(US)

(72) Inventor: Cotton, Wyatt Daniel
670 Hillgrove Court
Cincinnati Ohio 45246(US)

(72) Inventor: Morgan, John Wallis
1573 Acreview Drive
Cincinnati Ohio45240(US)

(74) Representative: Brooks, Maxim Courtney et al,
Procter & Gamble (NTC) Limited Whitley Road
Longbenton
Newcastle-upon-Tyne NE12 9TS(GB)

## (54) Hart butter fat composition, its preparation and use in chocolate manufacture.

(57) Hard butter fat comprising at least 75% symmetrical triglycerides of $C_{16}$-$C_{18}$ saturated fatty acids and $C_{18}$ *cis*-unsaturated fatty acids and less than 13% unsymmetrical triglycerides of these same fatty acids, and having a stearic to palmitic acid ratio of from 1.2:1 to 2:1 and a melting point of less than 98.6°F.

EP 0 023 062 A1

# HARD BUTTER FAT COMPOSITION, ITS PREPARATION AND USE IN CHOCOLATE MANUFACTURE

This invention relates to the field of hard butter compositions, confectioners' butters, or cocoa butter equivalents.

Cocoa butter has found extensive use in the food field as a key ingredient in the manufacture of chocolate. Cocoa butter has unique melting characteristics which give chocolate its exceptional quality of relative hardness at room temperature, yet complete melting at body temperature. According to the literature, cocoa butter begins to soften at 86-90$^{o}$F and completely melts about 95$^{o}$F. For a natural fat this melting range is narrow.

Cocoa butter is a natural product derived from the cocoa bean. As such, it is subject to variations in price, supply, and composition. Table 1 shows analyses of natural cocoa butter from a number of different sources, and demonstrates the variability which one may anticipate in cocoa butter composition.

Analysis of the composition of cocoa butter suggests that cocoa butter consists primarily (about 70-80%) of monounsaturated triglycerides, the major triglycerides of this type are oleoyldistearin, oleoylpalmitoylstearin, and oleoyldipalmitin; a small percentage of linoleic acid-containing glycerides are also present. Trisaturated triglycerides, as well as a number of liquid triglycerides principally of the unsymmetrical saturated diunsaturated (SUU) type, are also present. While the exact percentage of triglycerides making up cocoa butter may vary with the source, most investigators agree that these are the principal triglycerides present (see Table 1).

BAD ORIGINAL

TABLE 1

Triglyceride Composition of Natural Cocoa Butter (Percent)

| | a | b | c | d | e | f |
|---|---|---|---|---|---|---|
| P | 26.2 | 26.4 | 24.3 | 26 | 24-28 | 25.3 |
| St | 34.4 | 34.4 | 35.4 | 36 | 32-37 | 34.5 |
| Ol | 37.3 | 35.8 | 38.1 | 34 | 30-38 | 35.2 |
| Le | 2.1 | 2.5 | 2.2 | 3 | 2-4 | 3.3 |
| St/P | 1.3 | 1.3 | 1.5 | 1.4 | 1.4 | 1.4 |
| PUP | 4 | | | | | 16 |
| PUSt | 57 | | | | | 37 |
| StUSt | 22 | | | | | 28 |
| Total SUS | 83 | 80 | 80-85 | 77 | 70-78 | 81 |
| PUU + StUU | 14 | 17.6 | 15-20 | 21 | 15-20 | 17 |
| SSS | 2.0 | 0.9 | 2.0 | 2 | 1-3 | 1 |
| UUU | 1.0 | 1.5 | - | - | 3-5 | 1 |

where: P is palmitic, St is stearic
Ol is oleic, Le is linoleic
U is unsaturated, S is saturated

Source

a Hilditch and Williams, The Chemical Constitution of Natural Fats (4th Ed., 1964)

b British Patent 1,390,936 (Soeters et al, 1975)

c Ganapathy, Indian Food Packer, 30, 28 (1976)

d Jack Wolf, Manufacturing Confectioner, 53 (April, 1977)

e C. J. Soeters, Fette Seifen Anstrichmittel 72, 711 (1970)

f Analyses by Procter & Gamble Company (unreported)

The discovery of a satisfactory substitute for cocoa butter compatible with cocoa butter at levels up to 100% replacement would be useful. The desired substitute must, however, possess certain requirements in physical properties in order to be suitable as a cocoa butter substitute. It must possess a narrow melting point range, melt at or below body temperature, be relatively tasteless or have a bland taste, be substantially odorless, and also be compatible with natural cocoa butter in all desirable ratios. Most importantly, it must temper under the same conditions as cocoa butter to the most stable crystalline phase. This is generally referred to as the beta (β) or beta-three (β-3) phase. However, as indicated in more detail below, various workers in the field have utilized different nomenclature, e.g. $\beta_2$, State V, etc.

Numerous attempts have been made to obtain a cocoa butter substitute or a better confectioners' or hard butter fat by the hydrogenation of cottonseed and palm oils, interesterification of natural fats, fractional crystallization of palm oil, tallow and other natural fats.

None of these methods has been wholly satisfactory in producing a cocoa butter substitute which when mixed with chocolate liquor (cocoa nib), sugar, and other ingredients of chocolate will produce a chocolate confection using the same processing steps as are currently being used for added cocoa butter. Nor have they produced a fat which can be used to make equally good solid and enrobed chocolate confections.

In order to provide the expected chocolate properties of mouth melt and hardness plus resistance to bloom on storage, cocoa butter when tempered with the appropriate other ingredients must be in the proper crystalline state, called β-3. This is not straightforward because cocoa butter exhibits polymorphism, that is, it can exist in several different

BAD ORIGINAL

crystalline forms. The alpha form changes at room temperatures to the beta-prime (β') form, melting point 80°-84°F, which then changes more slowly to the stable beta-three (β-3) modification with a melting point of 93°-95°F. The development of the correct form in the fat phase is an all-important factor in the conditioning or tempering of chocolates prior to molding and enrobing. The mechanism of this tempering is complex since cocoa butter itself is a mixture of glycerides, each of which has its own polymorphic behavior.

Although not completely understood, the mechanism of tempering of cocoa butter is further complicated by fats in the ingredients which are in the presence of cocoa butter in milk chocolate processing (e.g. butterfat, coconut oil, peanut oil, etc.). For example, it is believed that the trans acid-containing triglycerides in butterfat interfere with the formation of the β-3 phase because they do not fit into the matrix formed by the symmetrical triglycerides in cocoa butter. It is believed that the saturated, short chain-containing triglycerides of coconut oil interfere with the formation of the β-3 phase for the same reason.

Other materials which have been implicated in the unsatisfactory performance of cocoa butters are fatty acids, partial glycerides, and fully saturated triglycerides.

Accordingly, it is an object of this invention to produce a hard butter fat which has a clear advantage over cocoa butter in confection processing in that it tolerates crystal-interfering materials such as trans acids, trisaturates, and liquid triglycerides which are introduced into chocolate with butterfat, coconut oil, etc.

It is a further object of this invention to produce a hard butter fat which has an advantage over

BAD ORIGINAL

cocoa butter because it can be mixed with 30% or more butter or milk fat (based on the fat phase) during the manufacture of milk chocolates without affecting the quality of the product or the processing conditions, whereas cocoa butter cannot.

It is also an object of the present invention to provide a hard butter fat which is completely compatible with cocoa butter and can be used to replace up to 100% of the added cocoa butter in a chocolate formulation without changing any of the processing conditions, e.g. enrobing, depositing, cooling and demolding. Furthermore, the hard butter fat herein tempers under the same or similar processing conditions as cocoa butter and cocoa butter-containing chocolates to the stable β-3 crystalline structure of cocoa butter.

Furthermore, it is an object to produce a range of hard butter fats which have the advantage that they can be used to make chocolate confections which possess various degrees of hardness.

## Disclosure of the Invention

The present invention relates to a hard butter fat, comprising:

(a) from 75% to 99% of symmetrical triglycerides of the formula:

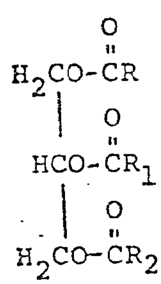

BAD ORIGINAL

(b) less than 13% of unsymmetrical triglyceride of the formula

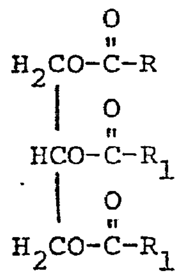

or

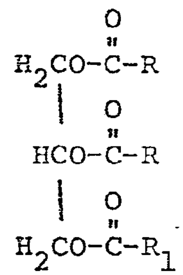

wherein:

$R\overset{\overset{O}{\|}}{C}-$ is a $C_{16}$ or $C_{18}$ saturated fatty acid moiety;

$R_1\overset{\overset{O}{\|}}{C}-$ is a $C_{18}$ cis-unsaturated fatty acid moiety;

$R_2\overset{\overset{O}{\|}}{C}-$ is a $C_{16}$ or $C_{18}$ saturated fatty acid moiety;

said hard butter fat having a stearic to palmitic acid ratio of from 1.2:1 to about 2:1 and a complete melting point of less than 98.6°F.

The balance of the composition is other fat materials.

## Definitions

By "hard butter fat" is meant a fat which can be used to replace up to 100% of the cocoa butter added to a confection, in particular, chocolates. The hard butterfat can also be used in pharmaceutical preparations to replace cocoa butter. Hard butterfat, cocoa butter substitute and cocoa butter equivalent are used interchangeably herein.

By "$C_{16}$ or $C_{18}$ saturated fatty acid" (S) herein, are meant those saturated (S) fatty acids having 16 or 18 carbon atoms. They are stearic (St) and palmitic (P) acids.

BAD ORIGINAL

By "$C_{18}$ cis-unsaturated fatty acid" herein is meant those unsaturated fatty acids having one or more double bonds and which are the cis-isomer. These $C_{18}$ cis-unsaturated fatty acids include oleic (Ol), linoleic (Le), and linolenic (Ln).

By "symmetrical disaturated cis-unsaturated triglyceride (SUS)" or "symmetrical triglyceride" herein, are meant those fatty acid esters of glycerine in which a saturated fatty acid occupies the 1 and 3 positions and the 2 position is esterified with a cis-unsaturated fatty acid. Examples of these SUS compounds are oleoyldipalmitin, oleoyldistearin, palmitoyloleoylstearin, linoleoyldipalmitin, linoleoyldistearin. Preferably, at least 90% of the cis-unsaturated fatty acid is oleic.

By "unsymmetrical triglycerides" herein are meant disaturated unsaturated triglyceride (SSU), i.e., those esters of glycerine and fatty acids in which the 1 and 2 positions of the glycerine are esterified with a saturated fatty acid moiety and the 3 position is esterified with an unsaturated fatty acid; and saturated diunsaturated triglycerides (SUU), i.e., those esters of glycerine and fatty acids in which the 1 and 2 positions of the glycerine are esterified with an unsaturated fatty acid and the remaining position is esterified with a saturated fatty acid.

By "stearic to palmitic acid ratio" (St/P) is meant that the fat is analyzed to determine total stearic acid content and the total palmitic acid content and then the ratio of these acid contents is calculated.

The stearic and palmitic acid moieties are expected to be distributed about the 1 and 3 positions on the glycerine molecule. Any one triglyceride molecule can contain either two of the same fatty acids or one of each, that is, POP, POSt, or StOSt.

BAD ORIGINAL

By "other fat materials" are meant components such as those normally found in cocoa butter, i.e. free fatty acids, mono- and diglycerides, unsaponifiable materials and similar lipids. Other triglycerides such as trisaturated triglycerides, those containing trans unsaturated fatty acids and those found in natural oils and fats, as well as synthetic triglycerides, can be used herein. These "other fat materials" may be comprised of any number of carbon atoms.

By "comprising" is meant that the composition can contain other materials so long as they do not affect the ability of the hard butterfat to function as a cocoa butter replacement. The term "comprising" encompasses the more restrictive terms, "consisting of" and "consisting essentially of".

All percentages used herein are by weight of the total composition unless otherwise designated.

## Composition

The compositions herein comprise a mixture of triglycerides, with minor amounts of other fat materials such as mono- and diglycerides as well as free fatty acids. At least 75% of the composition is mixtures of symmetrical triglycerides (SUS) and less than 13% is unsymmetrical triglycerides.

Surprisingly, the key to this invention is the control of the unsymmetrical triglyceride components. Although the mechanism is not known, and has not heretofore been disclosed, it is believed that these unsymmetrical triglycerides affect the crystalline matrix which the hard butter must achieve upon tempering. It has been discovered that when the amount of unsymmetrical triglyceride is above 13%, the hard butter fat becomes increasingly intolerant to other crystal-interfering materials.

BAD ORIGINAL

When the level of unsymmetrical triglycerides is below 13% and the amount of symmetrical triglycerides is from 75% to 99%, the hard butter compositions herein can contain a number of other fat materials, including crystal-interfering materials.

Another aspect of this invention is that the stearic to palmitic ratio (St/P) must be in the range of 1.2:1 to 2:1. This ratio can be used to independently control the hardness of the fats and thus the mouth melt of chocolate produced from these fats. Preferably the St/P will be from 1.3 - 1.5 in order to be equal to cocoa butter. However, if harder or softer fats are preferred, higher or lower St/P ratios might be preferred.

The preferred compositions are those in which the cis-SUS triglycerides are oleoyldipalmitin (POP), oleoyldistearin (StOSt) and oleoylpalmitoylstearin (POSt). A hard butter fat comprising from 30% to 60% POSt, and from 15% to 70% of oleoyldipalmitin, oleoyldistearin, and mixtures thereof is highly preferred.

Preferably, the amount of unsymmetrical triglyceride will be from 1% to 9%, and most preferably from 1% to 5% of the $C_{16}$ and $C_{18}$ triglyceride composition.

A typical hard butter·fat herein will contain the following:

| | % By Weight | Preferred | Most Preferred |
|---|---|---|---|
| cis-SUS | 75 to 99 | >85 | >90 |
| Total SSU and SUU | <13 | <9 | <5 |
| Other | <25 | <6 | <5 |

The other fat materials which can be present in the composition include monoglycerides, diglycerides, free fatty acids and trisaturated glycerides. These fat materials are found in many natural and synthetic fats and oils.

Naturally occurring liquid triglycerides such as soybean oil, cottonseed oil, corn oil, rapeseed oil, sunflower seed oils, coconut oil, palm oil, peanut oil, etc. can also be present in the composition as can synthetic triglycerides. The other fat materials which comprise the balance of the composition are not subject to the limitation that they contain only $C_{16}$ and $C_{18}$ fatty acids.

While the hard butter compositions herein can function effectively as cocoa butter equivalents in a composition containing up to 35% butterfat, and in the presence of other crystal-interfering materials, one skilled in the art will recognize that there are limits as to the tolerance for each type and combination of crystal-interfering material which may have an additive effect for any such fat composition. For example, up to 5% $C_{16}$ or $C_{18}$ trans-fatty acid triglycerides, and up to 3% trisaturated triglycerides can be tolerated by the hard butter fats herein.

Preparation

The hard butter fats can be prepared by blending the pure triglycerides to the desired composition. However, the isolation from natural fats and oils and/or the synthesis of pure triglycerides is difficult, time-consuming, and expensive.

Mixtures of the symmetrical triglycerides can be obtained from natural fats by crystallization or other isolation techniques. For example, the unsymmetrical triglycerides can be removed from natural cocoa butter by selective crystallization of the solid tryglycerides from various solvents, in particular acetone. Such a modified cocoa butter comprises at least about 90% of a mixture of oleoyldipalmitin (POP), oleoyldistearin (StOSt), and oleoylpalmitoylstearin (POSt).

Other conventional separation techniques, such as adsorption chromatography, etc. can be used to remove the unsymmetrical triglycerides and other fat

BAD ORIGINAL

components, as well as to adjust the St/P ratio of natural fats.

These and similar techniques known in the art can be used to modify other fats, whether natural or synthetic, to obtain the desired compositions.

The hard butter fat compositions can also be synthesized by using the process disclosed in U.S. 3,809,711, issued May 7, 1974 to J. J. Yetter, Reissue 28,737 (the disclosure of which is incorporated herein by reference). This process involves reacting a partial polyol monocarboxylic acid ester with an acidic anhydride in the presence of perfluoroalkyl sulfonic acid catalyst to produce a specific complete mixed polyol ester. The catalyst allows the reaction to proceed with substantially no ester group rearrangement.

The mixed polyol esters are chosen so that the specific stearic to palmitic acid ratio of the final fat is maintained. Thus, 1,3-diglycerides of palmitic and stearic acids can be esterified with oleic anhydride according to the '711 patent to produce a cocoa butter equivalent having the desired triglyceride composition.

Boron trifluoride can also be used as a catalyst for this type of synthesis. A description of this process is found in Reissue 28,728 of U. S. 3,808,245, issued to O'Connor and Wyness, April 30, 1974 (the disclosure of which is incorporated herein by reference).

Other stereospecific synthetic techniques can also be used to produce the desired triglycerides.

## Chemical Analysis

The triglyceride composition of natural fats has been studied by many different methods. Fractional crystallization, countercurrent distribution, various oxidation techniques, lipase splitting techniques, programmed temperature gas chromatography (GC), and thin-layer chromatography on silver nitrate impregnated silica (argentation TLC) are the most often cited methods. (For a good recitation of triglyceride

BAD ORIGINAL

analysis see Litchfield, Analysis of Triglycerides, Academic Press [1972].) Van der Waal's fatty acid distribution theory when applied with the technique mentioned above has enabled investigators to make convenient and reasonably accurate estimates of the triglyceride compositions of most natural vegetable fats. However, the Van der Waal 1,3- random-2-random distribution theory is not applicable to the calculation of the triglyceride compositions of hard butter fats since in most cases the materials are fractions from natural fats or modified natural fats, and this theory does not apply to such fats. (See "Letters to the Editor", J.O.A.C.S., 902 [1979].) Therefore, the routine analysis of the hard butters herein is done by argentation TLC, programmed temperature gas chromatography, fatty acid composition and lipase splitting.

Argentation TLC uses silver nitrate as a complexing reagent in chromatographic separations. The triglycerides separate according to the degree of unsaturation and the position of the fatty acid in the molecule. Cis- and trans-fatty acids are also distinguishable. However, chain length of the saturated fatty acids cannot be determined by this method. Thus, silver nitrate chromatographic techniques can be used to distinguish between SOS, SSO and SLS, but not between POSt and POP or StOSt. [For a detailed description of this process see Dallas and Padley, Lebensm.-Wiss. u.-Technol., 10, 332-336 (1977).]

The distribution of the triglycerides by fat carbon number of molecular weight can be obtained by programmed temperature gas chromatography. For a detailed description of this procedure see Eckert, Fette-Seifen-Anstrichmittel, 79, 360-362 (1977), and Jurriens, J. Amer. O. Chem. Soc., 42, 9 (1965).

By combining the results of these two analyses, a detailed compositional analysis can be calculated.

BAD ORIGINAL

X-ray Analysis

It is known that fats may be crystallized in one of a plurality of forms, depending on the temperature and speed at which crystallization is permitted to take place. In this connection the reader is referred to Chapman, Chem. Rev., 62, 433 (1962), and Lutton, J. Am. O. Chem. Soc., 43, 491 (1966), for a review of related details, especially those concerning means for identification of the various forms and their physical characteristics.

As shown by Lutton, the use of X-ray diffraction patterns is the most direct and can be the most informative technique for studying polymorphism. The identification, changes and transformation of forms can be followed from the X-ray diffraction pattern. Because of the large differences between the width of and the length of long chain triglyceride molecules, the observed X-ray diffractions fall conveniently into two groups corresponding to the long and short spacings. The long spacings are related to the distance between the planes formed by the methyl end groups and the short spacings are related to the cross-sectional arrangement. The long spacings for a particular phase are a linear function of the number of carbon atoms in the constituent fatty acid chains. The number of constituent fatty acid chains has been referred to as "the chain-length multiplicity", and may be designated as double (2), triple (3), etc. (for example, the beta-3 phase corresponds to triple chain-length multiplicity in the long spacings). The short spacings are practically independent of the chain length.

It is apparent, from the literature on the subject, that the identifying terminology for the crystalline forms of fats may vary depending on the investigator and in order that there may be no misunderstandings regarding the meaning of the terms herein

BAD ORIGINAL

they have been compared in Table 2.

TABLE 2

Some polymorphs and "states" of cocoa butter[1]

| Phase | State[1] | Phase[2] | Phase[3] |
|---|---|---|---|
| Alpha (α) | II | α | α |
| Beta prime (β') | IV | $\beta'_1$ | $\beta'_1$ |
| Stable beta (β) or (β-3) | V | $\beta_2$ | β |

[1]R. L. Wille and E. S. Lutton, J.Am.Oil Chem. Soc., 43 (1966)

[2]K. Larsson, Acta Chem. Scand., 20, 2255 (1966)

[3]U. Riiner, Lebensm. Wissench. Techol., 3, 101 (1970)

The hard butter fats herein are characterized by their ability to temper to the stable β phase, more specifically, the β-3 phase characteristic of cocoa butter. This phase is characterized by a four-line pattern at 3.4-4.2A° (angstrom), a strong line at about 4.6A°, a distinctive three-line pattern at 10.5, 12.6 and 15.8A°, and two strong lines at 31.6 and 63A°.

A ten-point scale, where 10 is excellent, is used to evaluate the X-ray diffraction patterns of the hard butter. The scale is based on the β-3 pattern, line resolution and intensity, and the absence of non β-3 lines. Typically for good performance in chocolate, a hard butterfat should have a minimal X-ray grade of from 6-7, preferably it will be 8, and most preferably 9-10. The X-ray diffraction patterns described above were obtained using a Phillips X-ray diffraction spectrometer, equipped with a 60KV copper target source, a scintillation counter, and a Model XRC-3100 power supply.

BAD ORIGINAL

The technique used to prepare solid fats for X-ray evaluation simulates the tempering procedure used in processing chocolate coatings before enrobing or molding. The technique is similar to the procedure used by Lutton (J. Amer. Oil Chem. Soc., 43, 491 [1966] at page 492), and Fincke (Analytical Methods of the Office International de Cacao et du Chocolate, page 86-E/1961).

A small beaker or jar is selected so that 20-30g of fat will fill it about half full. The fat is melted and thoroughly mixed (120-140°F) and then the temperature of the sample is lowered to 70-80°F with occasional stirring. This may be done in a water bath or at room temperature. Short exposure to lower temperatures (60°F) can be used to speed up the crystallization process; however, the sample should be constantly stirred to prevent a rapid crystal growth.

The sample is allowed to remain at room temperature until a grainy, paste-like slurry of crystals has developed. The finer these crystals, the better. Occasional stirring is sufficient until crystallization starts, then more frequent stirring is necessary to maintain a fine crystal size. When the paste is thick enough to stand a stirring rod or thermometer up in it, but not completely solidified, the crystal slurry is slowly warmed with vigorous stirring. This can be done by short exposures to a water bath 100-110°F. The sample is warmed until most but not all of the crystals have remelted (82-89°F). This temperature will depend on the melting point of the starting fat. The sample should still be turbid but pourable. If done slowly and carefully, the remaining crystals will be of the highest melting stable polymorphic form, and the sample is tempered. The maximum warming temperature for formation of β-3 phase fats is about 86-89°F.

The sample is cast in a small vial (∿10-20 g) and solidified at 60°F for 16-24 hours, then held at 70°F for 24 hours. The sample is then analyzed by X-ray diffraction.

## Use

The hard butter fat or modified natural fats prepared above can be used to make any number of confections. They can be substituted for up to 100% of the added natural cocoa butter now used in various confections such as milk chocolate, dark chocolates, tropical chocolates and other sweet snacks. That is, the hard butter fat can be used anywhere from 1% to 100% of the cocoa butter added to the formulation. This is primarily due to the low level of unsymmetrical triglycerides and to the ability of these fats to crystallize to the stable β-3 form similar to cocoa butter.

Preferred compositions of these hard butter fats and cocoa butter for use as added fats in chocolate manufacture are those comprising from 5% to 95% cocoa butter and 95% to 5% of the compositions of this invention.

Table 3 summarizes the composition of four fats and cocoa butter. Fats 1 through 4 are preferred embodiments of this invention.

TABLE 3

Compositional Data for Several Fats

| Composition | Cocoa Butter | Fat 1 | Fat 2 | Fat 3 | Fat 4 |
|---|---|---|---|---|---|
| *Cis*-SUS | 76 | 91 | 93 | 86 | 89 |
| Total unsymmetricals | 15 | 6 | 5 | 6 | 5 |
| Other | 9 | 3 | 2 | 8 | 6 |
| St/P | 1.4 | 1.5 | 2.0 | 1.4 | 1.9 |

Fats 1 and 2 were prepared by the method described in Example 1. Fats 3 and 4 were prepared by a process as described in Example 2.

BAD ORIGINAL

Tolerance to trans-triglycerides in Fat Blends

Summarized in Table 4 are X-ray data demonstrating improved tolerance to SES (disaturated $C_{16}$ or $C_{18}$ fatty acid elaidyl triglycerides). SES was present or added to each of the fats at 4.5%. The presence of this SES caused a change in the crystallization properties of these fats.

TABLE 4

X-ray Data Demonstrating Improved Tolerance to SES (trans acids)*

| Fat | % Unsymmetricals | % SES | X-ray Grades |
|---|---|---|---|
| cocoa butter | 15 | 4.5 | 7 |
| Fat 1 | 6 | 4.5 | 9 |
| Fat 3 | 6 | 4.5 | 8 |

*measured on fat blends as described in Example 5

Tolerance to trans-triglyceride in Chocolate

A further demonstration of this improved tolerance to trans-fatty acid triglycerides occurred when milk chocolates were prepared according to the procedure in Example 4 from cocoa butter, Fat 1, and Fat 3, all containing SES. Chocolate prepared at a butterfat level of 20% from the SES-containing cocoa butter did not enrobe well, did not set up and did not demold well. The solid bars showed signs of bloom formation. Chocolate prepared from Fats 1 and 3 containing SES enrobed well and had a viscosity only slightly higher than the control. The finished chocolate demolded well and showed good gloss.

Tolerance to Trisaturates in Chocolates

Improved tolerance to trisaturated triglycerides was demonstrated when cocoa butter and Fat 1 containing hardened palm oil (Iodine Value of 3) at levels of 2% and 4% were used to make four milk chocolate preparations containing 6.49% butterfat which is equivalent to 20% of the total fat system.

Both chocolates prepared from cocoa butter and Fat 1 containing hardened palm oil at the 2% and 4% level solidified faster and were significantly more viscous than a typical chocolate made with cocoa butter.

The chocolate prepared from the hardened palm oil-containing cocoa butter did not set up when passed through the cooling tunnel. Solid bars showed poor mold release at 2% and no mold release at the 4% hardened palm oil level. The chocolate bars assumed dull and grainy appearance soon after their removal from the cooling tunnel.

On the other hand, chocolate prepared from Fat 1 containing both 2% and 4% hardened palm oil, while significantly more viscous at the enrobing temperature than a control sample of Fat 1 chocolate, did set up when cooled, and showed good gloss and good mold release.

Tolerance to Trisaturates in Fat Blends

Fat blends were also made from Fat 1 and cocoa butter with 0.5%, 2% and 4% hardened palm oil. These fats blends were evaluated by complete melting point, penetration data, and X-ray analysis. Directionally, Fat 1 showed better tolerance than cocoa butter for trisaturated triglyceride impurities. Both fats had increased melting points and reduced β-3 X-ray quality;

BAD ORIGINAL

however, Fat 1 was directionally better. These data demonstrate the improved tolerance to trisaturated triglycerides by the hard butter fats herein.

Tolerance to Butterfat

Milk chocolate candies are conventionally prepared using a fat system that is made up of cocoa butter and butterfat. The butterfat is usually present at about 20% of the fat mixture.

In order to demonstrate the improved tolerance to butterfat, two milk chocolate samples containing 35% butterfat were prepared using cocoa butter and Fat 1 (as in Example 4). The cocoa butter chocolate did not enrobe well, did not set up, and did not demold well; whereas the chocolate prepared from Fat 1 enrobed well, demolded properly and gave no evidence of bloom formation. The Fat 1 chocolate also showed better heat stability. These data demonstrate improved tolerance of the hard butter fat herein to added butterfat in chocolate processing.

X-ray data confirming this improved tolerance to butterfat are shown in Table 5. A simulated chocolate fat phase as in Example 5 comprising a mixture of 30% butterfat and 70% cocoa butter showed poor β-3 development (X-ray grade of 5), while a mixture of 30% butterfat, 22% cocoa butter and 48% Fat 1 (a preferred embodiment of this invention) showed good β-3 development (X-ray grade of 8). [The 22% cocoa butter represents the amount which would be added to the chocolate via the chocolate liquor.]

TABLE 5

X-ray Data Demonstrating Improved Tolerance to Butter Fat

| Fats** | % Unsymmetricals | X-ray Grade* at Butter Fat Levels | | |
|---|---|---|---|---|
| | | 0% | 20% | 30% |
| Cocoa butter | 15 | 10 | 9 | 5 |
| Fat 1 | 5 | 10 | 10 | 8 |

*X-ray scale from 10-1 where 10 is excellent and 1 is very poor.

**as prepared in Example 5

BAD ORIGINAL

Compatibility With Cocoa Butter

Milk chocolate was also prepared using each designated fat according to a standard chocolate-making procedure described in Example 3 wherein all the added cocoa butter has been replaced by Fats 1, 3 and 4. Table 6 shows the evaluation of the chocolate as prepared by Example 3 or 4.

As is evident from this Table, Fats 1, 3 and 4 are compatible with cocoa butter in this context and can replace up to 100% of the added cocoa butter in chocolate.

TABLE 6

| | Cocoa Butter | Fat 1 | Fat 3 | Fat 4 |
|---|---|---|---|---|
| Processing | good | good | good | good |
| Demolding | good | good | good | good |
| Gloss | good | good | good | good |
| Bloom | none | none | none | none |
| Hardness | normal | normal | normal | harder |
| Snap | good | good | good | good |

Changing the Hardness of Chocolate

Table 6 also demonstrates that the hardness of chocolate can be altered without affecting any of the other important characteristics such as processing, gloss, bloom, etc. It is postulated that the chocolate made from Fat 4 is harder, due to its St/P ratio of 1.9:1. For comparison, the St/P ratio of cocoa butter is 1.4:1. A hard butter fat with an St/P ratio of 1.2:1 would make a chocolate which is softer than cocoa butter yet have properties equivalent to those shown in Table 6.

The complete melting point of Fat 4 is 93°-95°F compared to 92°-93°F for cocoa butter and 93°-94°F for Fat 1. Thus the St/P ratio can be used to provide a product with unique hardness and melting point ranges.

Other Uses

The hard butter fats can also be used to modify the behavior of other fats and to replace cocoa butter in pharmaceutical preparations. For example, it can be

used in a spreadable oleaginous food, i.e. a margarine or butter substitute-type product in which the cocoa butter equivalent or hard butter fat affects the physical characteristics of the fat or oil (shortening) composition to lend additional stability to the product at room temperature, yet maintain or enhance a "melt in the mouth" effect when eaten.

## Best Modes

### EXAMPLE 1

Preparation of Fat 1

To 50 lbs. of cold acetone (about 32°F) was added, with stirring, 5 lbs. of melted cocoa butter (about 130°F). The mixture was stirred for an additional 4-5 minutes, then covered and allowed to stand for about 16 hours at about 32°-40°F.

The solid fat was broken up and removed from the acetone by vacuum filtration. The solids were washed with 25 lbs. of cold acetone. The residual acetone was removed by evaporation on the steam bath and finally stripped off under vacuum.

About 4.0 lbs. of solid fat were recovered representing a yield of 80%. The composition of the starting cocoa butter and this modified cocoa butter are:

| | Cocoa Butter | Modified |
|---|---|---|
| SUS | 75 | 91 |
| SUU | 16 | 5 |
| Other fat materials | 9 | 4 |
| mp | 92°-93°F | 93.2-93.8°F |
| X-ray | excellent β-3 (grade 10) | excellent β-3 (grade 10) |
| St/P | 1.4 | 1.5 |

Fat 2 was also prepared in a similar manner.

### EXAMPLE 2

Preparation of Fat 4

Palm oil having an iodine value of less than 4 was reacted with glycerine in a glycerolysis reaction using 0.2% sodium hydroxide as catalyst. The 1,3-

BAD ORIGINAL

diglycerides were separated from the glycerolysis reaction using a fractional crystallization which produces 1,3-saturated diglycerides of greater than 96% purity. This diglyceride was esterified with oleic anhydride, the ratio of oleic anhydride to 1,3-diglycerides being about 1.5:1. The esterification was performed in accordance with the procedure described in Reissue Patent 28,737. The triglyceride was winterized, bleached, and deodorized to produce a cocoa butter replacement fat with a melting point of 93.2° to 94.7°F.

A chemical analysis of the fat was made using argentation TLC, programmed temperature gas chromatography, fatty acid analysis and lipase splitting. The following composition was calculated from this data.

| Triglyceride | % by Weight |
|---|---|
| oleoyldipalmitin (POP) | 11 |
| oleoylpalmitylstearin (POSt) | 39 |
| oleoyldistearin (StOSt) | 33 |
| SSO | 4 |
| SOO | 1 |
| SLS | 6 |
| monoglyceride | .1 |
| diglycerides | 3 |
| other materials | 2.9 |
| St/P | 1.9 |

Fat 3 was prepared in a similar manner.

Chocolate candies were made from Fat 4 and cocoa butter by the method described in Example 3.

EXAMPLE 3

Preparation of Chocolate Bars

| Ingredients | % |
|---|---|
| Whole milk powder[1] | 18 |
| Confectioners sugar | 47.6 |
| Vanillin | 0.05 |
| Lecithin | 0.35 |
| Added cocoa butter or hard butterfat | 18.64 |
| Blended chocolate liquor[2] | 14.0 |
| Anhydrous butterfat | 1.36 |

[1]contributes 5.13% fat

[2]contributes 7.00% fat

The fat and chocolate liquor were melted to about 120°F. The sugar, milk powder, and crushed vanillin were dry mixed together in a planetary mixer. One-third of the lecithin was then added to the dry mix, followed by the chocolate liquor, butterfat, and sufficient amount of the cocoa butter or hard butterfat to form a refinable paste. This paste was then passed through a 3-roll refiner at approximately 375 to 450 p.p.s.i. The refined paste was then conched in a Frisse conch at 140°F for about 5 hours, the remainder of the fat and lecithin added, and further conched at 140°F for another hour.

Chocolate solid bars and enrobed candies were made from cocoa butter and from the fat prepared in Example 1. The candies were evaluated by a panel in paired testing. The candies made from the hard butterfat from Example 1 were equally preferred to those made from cocoa butter when tested side-by-side.

BAD ORIGINAL

BAD ORIGINAL

EXAMPLE 4

Alternate Preparation of Chocolate Bars

| Ingredients | 20% butterfat[4] (%) | 35% butterfat[5] (%) |
|---|---|---|
| Whole milk powder[1] | 18.0 | 18.0 |
| Confectioners sugar | 47.6 | 47.6 |
| Vanillin | 0.05 | 0.05 |
| Lecithin | 0.35 | 0.35 |
| Cocoa butter or hard fat[2] | 18.64 | 13.83 |
| Blended chocolate liquor[3] | 14.0 | 14.0 |
| Anhydrous butterfat | 1.36 | 6.17 |

[1] supplies 5.13% of butterfat

[2] For chocolate samples to which SES or hardened palm oil was added, the materials were mixed with the cocoa butter or the fat at the indicated level (see Example 5)

[3] supplies 7% cocoa butter

[4] $$\% \text{ butterfat} = \frac{1.36 + 5.13}{5.13 + 18.64 + 7.0 + 1.36} = 20.1\%$$

[5] $$\% \text{ butterfat} = \frac{5.13 + 6.17}{5.13 + 13.88 + 7.0 + 6.17} = 35.2\%$$

The fat and chocolate liquor were melted to about 120°F. The sugar, milk powder, and crushed vanillin were dry mixed together in a Hobart mixer. One-third of the lecithin was then added to the dry mix, followed by the chocolate liquor, butterfat, and sufficient amount of the cocoa butter or hard butter fat to form a refinable paste. This paste is then passed through a 3-roll refiner at approximately 375 to 450 p.s.i. The refined paste is then combined with the remaining fat in a Hobart mixer and conched at 120°-140°F for about 5 hours.

EXAMPLE 5

Preparation of Fat Blends

Fat blends were prepared by melting the cocoa butter or hard butter fat, and then blending the fats at the desired level. Hardened palm oil and SES were added to the melted fats as solids.

BAD ORIGINAL

SES Blends

Cocoa butter and Fat 1 were each melted and 4.5% SES added to them. The fat blends contained 95.5% cocoa butter or Fat 1, and 4.5% SES. Fat 3 contains 4.5% SES, therefore, 100% of Fat 3 was used in the X-ray evaluations.

Hardened Palm Oil Blends

The composition of these fat blends are shown in Table 7.

TABLE 7

Hardened Palm Oil Fat Blends

| Fat | Percent Hardened Palm Oil | | |
|---|---|---|---|
| | 0.5 | 2 | 4 |
| Cocoa butter | 99.5 | 98 | 96 |
| Fat 1 | 99.5 | 98 | 96 |

Butterfat Blends

Butterfat blends were prepared from each fat as shown in Table 8.

TABLE 8

Butterfat Blends

| % Butterfat | % Cocoa Butter |
|---|---|
| 0 | 100 |
| 20 | 80 |
| 25 | 75 |
| 30 | 70 |

| % Butterfat | Fat 1 | % Cocoa Butter |
|---|---|---|
| 0 | 78 | 22 |
| 20 | 58 | 22 |
| 25 | 53 | 22 |
| 30 | 48 | 22 |

Fat blends made from Fats 2 and 3 were identical to those tabulated for Fat 1.

BAD ORIGINAL

CLAIMS

1. A hard butter fat composition characterized by:-

(a) from 75% to 99% by weight of a mixture of symmetrical triglycerides of the formula:

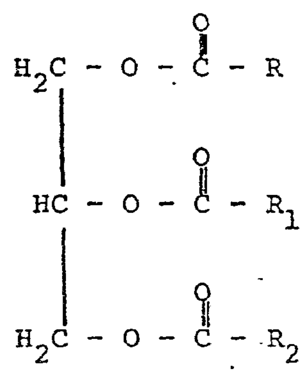

(b) less than 13% by weight of unsymmetrical triglycerides selected from the group consisting of:-

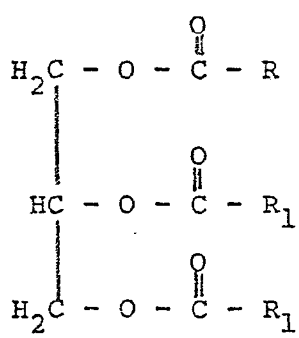

and

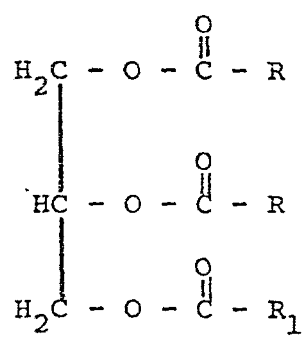

wherein $R\overset{\overset{O}{\|}}{C}-$ is a $C_{16}$ or $C_{18}$ saturated fatty acid, $R_1\overset{\overset{O}{\|}}{C}-$ is a $C_{18}$ cis-unsaturated fatty acid; and $R_2\overset{\overset{O}{\|}}{C}-$ is a $C_{16}$ or $C_{18}$ saturated fatty acid; said hard butter fat composition having a stearic to palmitic acid ratio of from 1.2:1 to 2:1 and a complete melting point of less than 98.6°F (37°C).

BAD ORIGINAL

2. A composition according to Claim 1 characterized in that at least 90% of the cis-unsaturated fatty acid is oleic acid.

3. A composition according to Claim 1 or 2 characterized in that said symmetrical triglyceride comprises at least 85% by weight of the hard butter and said unsymmetrical triglycerides comprise less than 9% of the hard butter.

4. A composition according to Claim 3 characterized in that said symmetrical triglyceride comprises at least 90% of the hard butter and said unsymmetrical triglycerides comprise less than 5% of the hard butter.

5. A composition according to any of Claims 1 to 4 characterized in that said stearic to palmitic acid ratio is from 1.4:1 to about 1.8:1.

6. A composition according to any of Claims 1 to 5 characterized by:

30% to 60% palmitoyloleoylstearin;
25% to 35% oleoyldistearin;
10% to 20% oleoyldipalmitin; and
5% to 10% other fat materials.

7. A fat composition for use in chocolate manufacture characterized by:-

(a) from 65% to 95% of a hard butter composition according to any of Claims 1 to 6; and
(b) from 5% to 35% butterfat.

BAD ORIGINAL

8. A chocolate confection characterized in that it comprises sugar, cocoa, and a fat composition according to any of Claims 1 to 7.

9. A composition useful for the manufacture of chocolate characterized by:-

(a) from 5% to 95% of a composition according to Claim 7; and
(b) from 5% to 95% cocoa butter.

10. A process for making a hard butter fat composition according to Claim 1 characterized by lowering the concentration of unsymmetrical triglycerides in cocoa butter to below 13% by weight of the cocoa butter.

BAD ORIGINAL

0023062

European Patent Office

# EUROPEAN SEARCH REPORT

Application number
EP 80 20 0668

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| XD | US - E - 28 737 (J.J. YETTER)<br>* Example 1 *<br>-- | 1-6 | A 23 D 5/00<br>A 23 G 1/00 |
| X | US - A - 3 410 881 (J.B. MARTIN et al. )<br>* Example 1 *<br>-- | 1-5 | |
| X | FR - A - 2 300 795 (PROCTER & GAMBLE CO.)<br>* Page 12, example 1 - page 16, example 4 *<br>-- | 1-5 | TECHNICAL FIELDS SEARCHED (Int. Cl.3) |
| XD | FETTE-SEIFEN-ANSTRICHMITTEL, vol. 7, no.8, published in August 1970 Berlin, DE<br>C.J. SOETERS, "Das physikalische Verhalten und die chemische Zusammensetzung von Schokolade, Kakaobutter und einigen Kakaobutter-Austauschfetten",<br>pages 711-718.<br>* Page 714, column 1, paragraph 3 - page 714, column 2, paragraph 3; tables 6,7, 10,11 *<br>-- | 1-6 | A 23 D 5/00<br>A 23 G 1/00<br>A 23 G 3/00<br>A 23 G 9/02<br>C 11 C 3/02 |
| D | GB - A - 1 390 936 (UNILEVER NV)<br>* Page 3, line 109 - page 4, line 59; page 7,8,9, tables; page 11, lines 37-76 *<br>-- | 1-3, 7-9 | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L. citation for other reasons |
| | GB - A - 1 252 224 (SCM. CORP.)<br>* Page 1, lines 21-40; page 2, ./. | 1-6 | |
| X | The present search report has been drawn up for all claims | | &: member of the same patent family, corresponding document |

| Place of search | Date of completion of the search | Examiner |
|---|---|---|
| The Hague | 16-10-1980 | SCHUERMANS |

EPO Form 1503.1 06.78